# EUROPEAN PATENT APPLICATION

(11) **EP 3 618 050 A2**
(43) Date of publication of application: **04.03.2020**
(21) Application number: 19195077.3
(22) Date of filing: 03.09.2019
(51) Int. Cl.: G09G 3/38

(54) **ELECTRONIC APPARATUS, METHOD FOR CONTROLLING ELECTRONIC APPARATUS, AND STORAGE MEDIUM**

(30) Priority: 03.09.2018 CN 201811021447
(71) Applicant: GUANGDONG OPPO MOBILE TELECOMMUNICATIONS CORP., LTD., Wusha, Chang'an Dongguan, Guangdong 523860 (CN)
(72) Inventor: ZHANG, Haiping, Dongguan, Guangdong 523860 (CN)
(74) Representative: Manitz Finsterwald Patent- und Rechtsanwaltspartnerschaft mbB

(57) **Abstract**

An electronic apparatus , a method for controlling the electronic apparatus , and a storage medium. The electronic apparatus includes a display screen (120), an electrochromic component (124) arranged on the display screen (120), a functional component (190) covered by the electrochromic portion, and a control circuit (210) electrically connected to the electrochromic component (124) and configured to control the electrochromic component (124). When the functional component (190) is in an active state, the control circuit (210) controls to increase a light transmittance of the electrochromic component (124), such that the functional component (190) is able to acquire an optical signal transmitting through the electrochromic component (124); when the functional component (190) is in an idle state, the control circuit (210) controls to reduce the light transmittance of the electrochromic component (124), such that the functional component (190) is able to be hidden.

## Description

### TECHNICAL FIELD

The present disclosure relates to the field of electronic apparatuses, and in particular, to an electronic apparatus, a method for controlling the electronic apparatus, and a storage medium.

### BACKGROUND

With the continuous development of electronic technologies, an electronic apparatus may have more and more functions. Some functional components, such as a front camera, a light sensor, and the like, need to be arranged at a display side of a display screen of the electronic apparatus. Thus, it is necessary to define holes in the display screen to allow light to enter the functional components. At the same time, in order to block the functional components, it is necessary to dispose black ink on the display screen at positions corresponding to the functional components. In this way, less light will enter the functional components, and effects of the functional components may be influenced as a result.

### SUMMARY

The embodiments of the present disclosure provide an electronic apparatus. The electronic apparatus includes a display screen, an electrochromic component arranged on the display screen, a functional component covered by the electrochromic component, and a control circuit electrically connected to the electrochromic component and configured to control the electrochromic component. The functional component may have an active state and an idle state. When the functional component is in the active state, the control circuit controls to increase a light transmittance of the electrochromic component, such that the functional component of the electronic apparatus is able to acquire an optical signal transmitting through the electrochromic component; when the functional component is in the idle state, the control circuit controls to reduce the light transmittance of the electrochromic component, such that the functional component of the electronic apparatus is able to be hidden.

The embodiments of the present disclosure further provide a method for controlling an electronic apparatus. The electronic apparatus includes a display screen, a functional component, and an electrochromic component, the electrochromic component covers the functional component. The method may include the following blocks: acquiring a state of the functional component in real time, wherein the state comprises an active state and an idle state; controlling the electrochromic component to increase a light transmittance of the electrochromic component when the functional component is in the active state, such that the functional component of the electronic apparatus is able to acquire an optical signal transmitting through the electrochromic component; and controlling the electrochromic component to reduce the light transmittance when the functional component is in the idle state, such that the functional component of the electronic apparatus is able to be hidden.

The embodiments of the present disclosure further provide a storage medium storing a computer program which, when executed by a computer, cause the computer to perform the method as previously described.

### BRIEF DESCRIPTION OF THE DRAWINGS

In order to describe the technical solutions in the embodiments of the present disclosure more clearly, the drawings required to be used in descriptions of the embodiments will be briefly described below. Obviously, the drawings described below are only some embodiments of the present disclosure, and those skilled in the art can obtain other drawings according to the drawings without creative efforts.
FIG. 1 is a schematic structural view of an electrochromic component according to some embodiments of the present disclosure.
FIG. 2 is a schematic structural view of an electrochromic component according to some embodiments of the present disclosure.
FIG. 3 is a schematic structural view of an electronic apparatus according to some embodiments of the present disclosure.
FIG. 4 is a schematic structural view of an electronic apparatus according to some embodiments of the present disclosure.
FIG. 5 is a cross-sectional view of the electronic apparatus shown in FIG. 4 and taken along line A-A'.
FIG. 6 is a schematic view of the electronic apparatus according to some embodiments of the present disclosure.
FIG. 7 is a schematic structural view of an electronic apparatus according to some embodiments of the present disclosure.
FIG. 8 is a schematic structural view of an electronic apparatus according to some embodiments of the present disclosure.
FIG. 9 is a schematic structural view of an electronic apparatus according to some embodiments of the present disclosure.
FIG. 10 is a schematic structural view of an electronic apparatus according to some embodiments of the present disclosure.
FIG. 11 is a block diagram of an electronic apparatus according to some embodiments of the present disclosure.
FIG. 12 is a flow chart of a method for controlling an electronic apparatus according to some embodiments of the present disclosure.
FIG. 13 is a flow chart showing the block 102 shown in FIG. 12 according to some embodiments of the present disclosure.

### DETAILED DESCRIPTION

Technical solutions in the embodiments of the present disclosure will be clearly and completely described in the following with reference to the accompanying drawings in the embodiments. Apparently, the described embodiments are only a part of the embodiments of the present disclosure, and not all the embodiments. Based on the embodiments of the present disclosure, those skilled in the art may acquire other embodiments without creative efforts. All these shall be covered within the protection scope of the present disclosure.

According to some embodiments of the present disclosure, a display screen, an electronic apparatus, a method for controlling an electrochromic component, and a storage medium may be provided. Details will be described below. In some embodiments, the electronic apparatus may be an apparatus such as a mobile phone, a tablet computer, a Personal Digital Assistant (PDA), VR glasses, and the like.

In one aspect, an electronic apparatus may be provided. The electronic apparatus includes a display screen, an electrochromic component arranged on the display screen, a functional component covered by the electrochromic component, and a control circuit electrically connected to the electrochromic component and configured to control the electrochromic component. The functional component may have an active state and an idle state. When the functional component is in the active state, the control circuit controls to increase a light transmittance of the electrochromic component, such that the functional component of the electronic apparatus is able to acquire an optical signal transmitting through the electrochromic component; when the functional component is in the idle state, the control circuit controls to reduce the light transmittance of the electrochromic component, such that the functional component of the electronic apparatus is able to be hidden.

In some embodiments, the electronic apparatus further comprises a cover covering the display screen. The electrochromic component is disposed between the cover and the display screen.

In some embodiments, the display screen comprises a display region and a non-display region; the electrochromic component covers the non-display region, and a projection of the functional component on the display screen is located within the non-display region. When the functional component is in the idle state, the control circuit controls to change a color of the electrochromic component to black.

In some embodiments, the display screen comprises two substrates and a display layer sandwiched between the two substrates; the display layer is disposed in the display region.

In some embodiments, the electrochromic component may include a first electrochromic portion and a second electrochromic portion. The first electrochromic portion may cover the non-display region and be electrically connected to a first control terminal of the control circuit. The second electrochromic portion may cover the display region and be electrically connected to a second control terminal of the control circuit.

In some embodiments, the number of the functional components is at least two, and the electrochromic component comprises at least two electrochromic portions in one-to-one correspondence with the at least two functional components; each of the functional components is disposed correspondingly to a corresponding one of the electrochromic portions and connected to the corresponding one of the electrochromic portions via the control circuit.

In some embodiments, the electronic apparatus may further comprise a housing. The display screen is mounted in the housing; the housing comprises a back cover; the back cover and the display screen are located at two opposite sides of the electronic apparatus, and the electrochromic component are disposed between the display screen and the back cover.

In some embodiments, the back cover comprises a transparent body and an additional electrochromic component attached to the transparent body; the control circuit is electrically connected to the additional electrochromic component and configured to control a light transmittance of the additional electrochromic component.

In another aspect, a method for controlling an electronic apparatus may be provided. The electronic apparatus includes a display screen, a functional component, and an electrochromic component, the electrochromic component covers the functional component. The method may include the following blocks: acquiring a state of the functional component in real time, wherein the state comprises an active state and an idle state; controlling the electrochromic component to increase a light transmittance of the electrochromic component when the functional component is in the active state, such that the functional component of the electronic apparatus is able to acquire an optical signal transmitting through the electrochromic component; and controlling the electrochromic component to reduce the light transmittance when the functional component is in the idle state, such that the functional component of the electronic apparatus is able to be hidden.

In some embodiments, the display screen may include a display region and a non-display region. The controlling the electrochromic component to change the light transmittance of the electrochromic component when the functional component is in the active state, such that the functional component of the electronic apparatus is able to acquire the optical signal transmitting through the electrochromic component may include: determining whether the display region is displaying information when the function component is in the active state; controlling to change the light transmittance of the electrochromic component based on a determination that the display region is not displaying information, such that the functional component of the electronic apparatus is able to acquire the optical signal transmitting through the electrochromic component; setting a plurality of acquisition periods which are separated from each other with intervals based on a determination that the display region is displaying information; and controlling to change the light transmittance of the electrochromic component during the acquisition periods, such that the functional component of the electronic apparatus is able to acquire the optical signal transmitting through the electrochromic component while controlling the display screen to display a black image.

In some embodiments, the electrochromic component may include a first electrochromic portion and a second electrochromic portion; the first electrochromic portion covers the non-display region, and the second electrochromic portion covers the display region; a projection of the functional component on the display screen is located within the non-display region. The controlling to change the light transmittance of the electrochromic component based on the determination that the display region is not displaying information, such that the functional component of the electronic apparatus is able to acquire the optical signal transmitting through the electrochromic component may include: controlling to change a light transmittance of the first electrochromic portion when the display region is not displaying content, such that the functional component of the electronic apparatus is able to acquire the optical signal transmitting through the first electrochromic portion.

In some embodiments, the number of the functional components is at least two, and the electrochromic component comprises at least two electrochromic portions disposed in one-to-one correspondence with the at least two functional components. The method may further include: acquiring a state of each of the functional components in real time; and controlling, according to the state of each of the functional components, to change light transmittances of the electrochromic portions corresponding to the functional components.

In some embodiments, the display screen may include a display region and a non-display region, and a projection of the functional component on the display screen is located within the non-display region; the non-display region is covered by the electrochromic component. The controlling the electrochromic component to reduce the light transmittance when the functional component is in the idle state may include: when the functional component is in the idle state, controlling to change a color of the electrochromic component to black.

In some embodiments, the method may further include: determining whether the electronic apparatus fails; based on a determination that the electronic apparatus fails, controlling the electrochromic component to be transparent by controlling a voltage applied to the electrochromic component.

In a further aspect, a storage medium may be provided. The storage medium may store a computer program which, when executed by a computer, cause the computer to perform the method as previously described.

Electrochromism may refer to a phenomenon that optical properties (such as reflectivity, light transmittance, absorptivity, and the like) of material may change such that a color of the material may be stably and reversibly changed under the action of an external electric field. Electrochromism may appear as a reversible change in the color and transparency of the material. Material having an electrochromic property may be referred to as electrochromic material. A component made of the electrochromic material may be referred to as an electrochromic component.

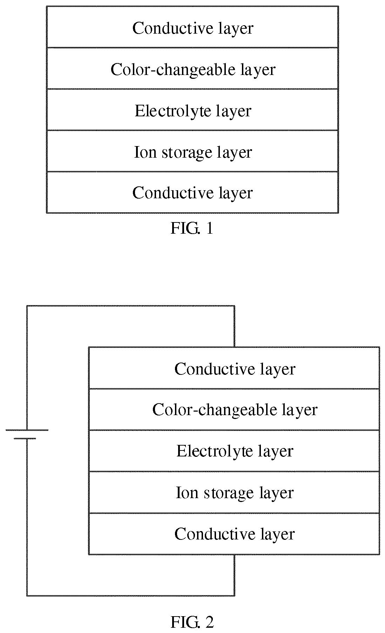

As shown in FIG. 1, the electrochromic component may include two conductive layers stacked on one another, a color-changeable layer, an electrolyte layer, and an ion storage layer. The color-changeable layer, the electrolyte layer, and the ion storage layer may be disposed between the two conductive layers. In some embodiments, one of the conductive layers, the color-changeable layer, the electrolyte layer, the ion storage layer, and the other of the conductive layers are successively stacked on one another.

Each of the conductive layers may be a transparent conductive layer and may have excellent electrical conductivity and good light transmittance. The transparent conductive layer may include indium tin oxide (ITO), tin oxide (SnO₂), antimony tin oxide (ATO), and the like. In some embodiments, the transparent conductive layer may be made of ITO, SnO₂, ATO, and the like.

The color-changeable layer may be a core layer of the electrochromic component and may also be a layer at which an electrochemical reaction may occur. The material of the color-changeable layer may be classified into inorganic electrochromic material and organic electrochromic material. The inorganic electrochromic material may include tungsten trioxide (WO₃) or nickel oxide (NiO). The organic electrochromic material may include polythiophenes and derivatives thereof, viologen, tetrathiafulvalene, metal phthalocyanine compounds, and the like.

The electrolyte layer may be composed of special conductive material. For example, the conductive material may be liquid electrolyte material containing a solution of lithium perchlorate, sodium perchlorate, and the like. In some embodiments, the conductive material may also be solid electrolyte material.

The ion storage layer of the electrochromic component may be configured to store charges. That is, the ion storage layer may be configured to store corresponding reactive ions when the material of the color-changeable layer undergoes a redox reaction, thereby ensuring charge balance of the entire electrochromic component.

As shown in FIG. 2, when a certain voltage is applied between the two transparent conductive layers, the material of the color-changeable layer of the electrochromic component may undergo a redox reaction under the action of the voltage, thereby causing a change in color.

For example, when the voltage applied between the two transparent conductive layers of the electrochromic component changes from 0V to about IV, the color of the electrochromic component may change from white to red. When the voltage applied between the two transparent conductive layers changes from 0V to about 1.2V, the color of the electrochromic component may change from white to black. When the voltage applied between the two transparent conductive layers changes from about 1.2V to about -0.2V, the color of the electrochromic component may change from black to white, and so on.

In some embodiments, it is possible to obtain the electrochromic components having different properties by using different polymers as the material of the color-changeable layer. Some of the electrochromic components may have the following properties: when a certain voltage is applied to change the electrochromic component to a certain color, the color of the electrochromic component may remain unchanged for a long time even if the applied voltage is removed. For example, when being applied with a voltage of about 1.6V, the color of the electrochromic component may change to blue. After that, the voltage is removed, and the electrochromic component may still remain in blue for more than 24 hours.

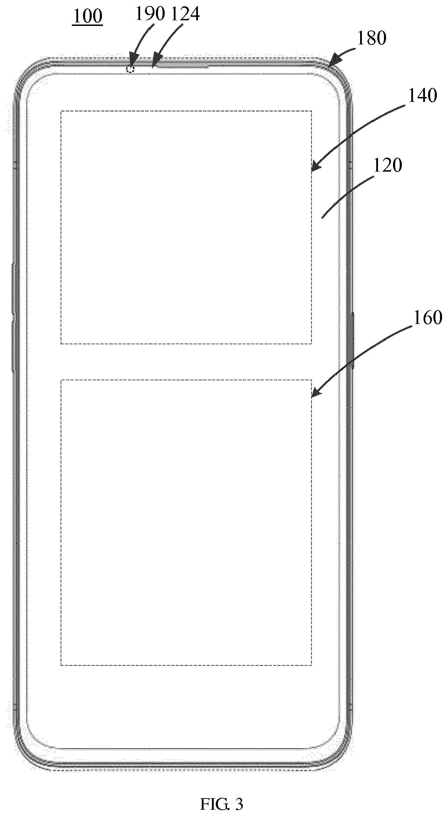

FIG. 3 is a schematic structural view of an electronic apparatus according to some embodiments of the present disclosure. As shown in FIG. 3, the electronic apparatus 100 may include a display screen 120, a control circuit board 140, a battery 160, a housing 180, and a functional component 190. It should be noted that the electronic apparatus 100 may include other components, and the components of the electronic apparatus may not be limited to the above components.

In some embodiments, a cover may also be arranged on the display screen 120 and cover the display screen 120. The cover may be a transparent glass cover, such that the display screen 120 may display information through the cover. In some embodiments, the cover may be a glass cover made of material such as sapphire.

The display screen 120 may be mounted in the housing 180. The display screen 120 may be electrically connected to the control circuit board 140 to form a display surface of electronic apparatus 100. The display screen 120 may have a regular shape. For example, the display screen 120 may be in shape of a cuboid. A non-display region may be formed on a top and/or bottom of the electronic apparatus 100. That is to say, the display screen 120 may include a display region and the non-display region. The non-display region may be formed on an upper portion of the electronic apparatus 100 that is disposed above the display region of the display screen 120, and/or a lower portion of the electronic apparatus 100 that is disposed below the display region of the display screen 120. Components, such as a front camera, a rear camera, and the like, may be mounted in the non-display region of the electronic apparatus 100. It should be noted that the display screen 120 may also cover the entire display surface of the electronic apparatus 100. That is, no non-display region is provided, and the electronic apparatus 100 may realize full-screen display.

In some embodiments, the display screen 120 may be a Liquid Crystal Display (LCD) or an Organic Light-Emitting Diode (OLED) display.

The control circuit board 140 may be mounted in the housing 180. The control circuit board 140 may be a main board of the electronic apparatus 100. The control circuit board 140 may be integrated with one, two or more of the functional components 190 such as a motor, a microphone, a speaker, a headphone interface, a universal serial bus interface, the front camera, the rear camera, a distance sensor, an ambient light sensor, a receiver, a controller, and the like. In some embodiments, the control circuit board 140 may be screwed into the housing 180 by using a screw, or may be snapped into the housing 180 by using a snap. It should be noted that, in some embodiments of the present disclosure, the manner in which the control circuit board 140 is fixed to the housing 180 may not be limited thereto. The control circuit board 140 may be fixed to the housing 180 in other manner. For example, the control circuit board 140 may be fixed to the housing 180 by using both the snap and the screw.

In some embodiments, as further shown in FIG. 3, the electronic apparatus 100 may further include an electrochromic component 124. The electrochromic component 124 may be arranged on the display screen 120. At least a part of the electrochromic component 124 may be disposed correspondingly to the functional component 190 and cover the functional component 190. That is to say, the functional component 190 may be covered by the electrochromic component 124.

In some embodiments, a control circuit may be integrated on the control circuit board 140. The control circuit may be electrically connected to the electrochromic component 124 and configured to control a light transmittance or color of the electrochromic component 124. For example, when the functional component 190 is in an active state, the control circuit controls to increase the light transmittance of the electrochromic component 124, such that the functional component 190 may be able to be exposed from the electrochromic component and acquire an optical signal transmitting through the electrochromic component 124.When the functional component is in an idle state, the control circuit controls to reduce the light transmittance of the electrochromic component 124, such that the functional component 190 may be able to be hidden by the electrochromic component 124.

In some embodiments, the term "active state" may refer to a state in which the functional component is in operation. The term "idle state" may refer to a state in which the functional component is not in operation. The term "display surface" may refer to a surface of the display screen on which may display information.

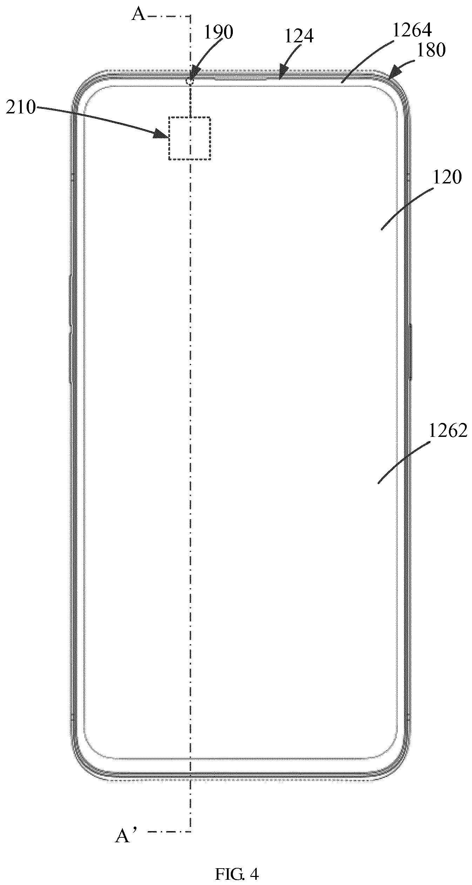

FIG. 4 is a schematic structural view of an electronic apparatus according to some embodiments of the present disclosure. As shown in FIG. 4, the electronic apparatus 100 may include a display screen 120, an electrochromic component 124, a functional component 190, and a control circuit 210. The electrochromic component 124 may be on the display screen 120, and cover at least a part of the display surface of the display screen 120. The display screen 120 may cover the functional component 190, and the electrochromic component 124 may also at least cover the functional component 190. That is to say, at least a part of the electrochromic component 124 may be disposed correspondingly to the functional component 190 and cover the functional component 190. The control circuit 210 may be electrically connected to the electrochromic component 124. The control circuit 210 may also be electrically connected to the functional component 190.

When the functional component 190 is in an active state, the control circuit 210 may control the electrochromic component 124 to change the light transmittance, such that the functional component 190 of the electronic apparatus 100 may be able to be exposed from the electrochromic component and acquire an optical signal transmitting through the electrochromic component 124. When the functional component 190 is in an idle state, the control circuit 210 may control the electrochromic component 124 to reduce the light transmittance, such that the functional component 190 of the electronic apparatus 100 may be able to be hidden by the electrochromic component 124.

More specifically, the control circuit 210 may directly output different voltages, and then the output voltage may directly drive the electrochromic component 124. In some embodiments, the functional component 190 may be at least one component that needs to obtain external light at an outer side of the electronic apparatus 100. The at least one component may include the front camera, a light sensor, a proximity sensor, a 3D structured optical module, and the like. In some embodiments, by changing the light transmittance of the electrochromic component 124, it is possible for the function component 190 to obtain the external light. Besides, the functional component 190 may be completely hidden by the electrochromic component 124 when the functional component 190 is not in use. In this way, it is unnecessary to define a hole in the display screen 120 to allow the external light to enter the functional component 190. At the same time, the electrochromic component 124 may be used to replace the black ink, that is, the electronic apparatus may include no black ink therein, such that more external light may be allowed to enter the functional component 190, thereby improving the effect of the functional component 190.

It should be noted that, in addition to control the electrochromic component 124 by changing the voltage applied to the electrochromic component 124, the control circuit 210 may also control the electrochromic component 124 by changing the current, or changing the pressure applied to the electrochromic component 124.

In some embodiments, the electrochromic component 124 and the functional component 190 may be both electrically connected to the control circuit 210. When the functional component 190 is switched to the active state, the control circuit 210 may adjust a driving voltage of the electrochromic component 124 to enhance the light transmittance of the electrochromic component 124. In this way, the functional component 190 may be able to be exposed from the electrochromic component and acquire more optical signals transmitting through the electrochromic component 124. However, when the functional component 190 is switched to the idle state, the control circuit 210 may adjust the driving voltage of the electrochromic component 124, to reduce the light transmittance of the electrochromic component 124. In this way, the functional component 190 may be hidden by the electrochromic component 124.

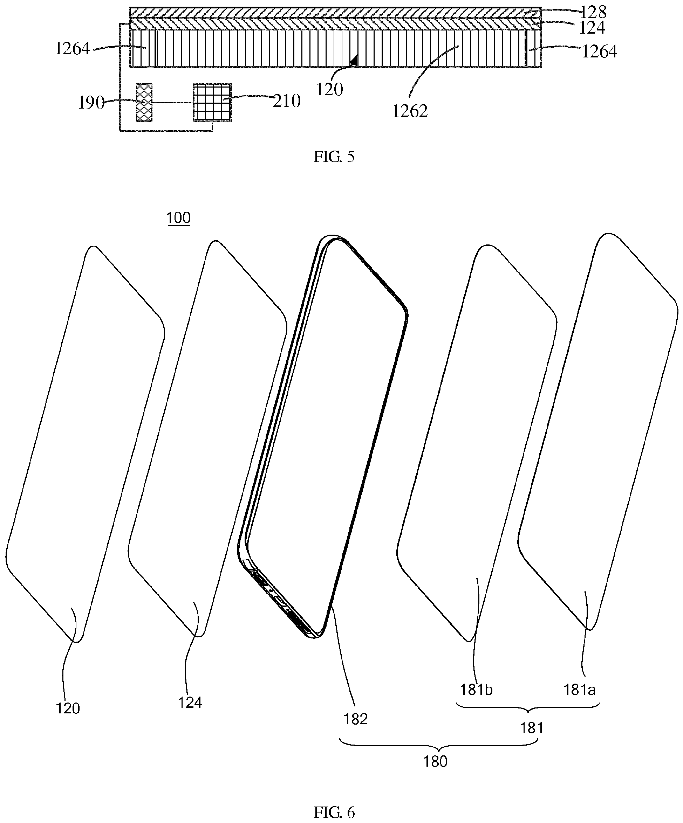

FIG. 5 is a cross-sectional view of the electronic apparatus shown in FIG. 4 and taken along line A-A'. As shown in FIG. 5, the display screen 120 may include a display region 1262 and a non-display region 1264. A projection of the functional component 190 on the display screen 120 may be located within the non-display region 1264. The non-display region 1264 of the display screen 120 may surround the display region 1262. When the projection of the function component 190 on the display screen 120 is located within the non-display region 1264, the non-display region 1264 may be fully used without occupying the display region 1262. In this way, the display ratio of the display region 1262 may be increased. At the same time, more light may enter the functional component 190. As is further shown in FIG. 6, the housing 180 may include a back cover 181 and a frame 182. In some embodiments, the back cover 181 and the display screen 120 may be disposed at two opposite sides of the electronic apparatus 100. The frame 182 may surround the back cover 181, and the electrochromic component 124 may be disposed between the display screen 120 and the back cover 181. In some embodiments, the display screen 120 may be disposed in the frame 181, and a receiving space may be defined between the back cover 181 and the display screen 120. The receiving space may be configured to receive the functional component, the control circuit, and the like.

The electrochromic component 124 may also cover both the non-display region 1264 and the display region 1262. That is, the electrochromic component 124 may cover the entire display screen 120. In some embodiments, it is possible to adjust a driving voltage of the electrochromic component 124, such that the electrochromic component 124 may be completely changed to colorless transparent or nearly transparent (with very light color). In this way, it is possible to see an inner side of the electronic apparatus 100 via the display screen 120. When a problem arises in the electronic apparatus 100, that is, when the electronic apparatus 100 fails, it is possible to see whether there is a problem or a failure in the inner side of the electronic apparatus 100. Likewise, the back cover 181 of the electronic apparatus 100 may be a back cover including an additional electrochromic component 181b. That is, the back cover 181 may include a transparent body 181a and the additional electrochromic component 181b attached to the transparent body 181a. The additional electrochromic component 181b may cover the entire transparent body 181a, and the control circuit 210 may be electrically connected to the additional electrochromic component 181b, and configured to control a light transmittance of the additional electrochromic component 181b. In this way, it is possible to change the color of the additional electrochromic component 181b to colorless transparent or to show one or more colors by using the control circuit 210 to adjust the driving voltage of the electrochromic component 181b. When a problem arises in the electronic apparatus 100, that is, when the electronic apparatus 100 fails, it is possible to see whether there is a problem or a failure in the inner side of the electronic apparatus 100. Besides, it is also possible to change the color of the back cover 181, such that the back cover 181 may be more ornamental. More specifically, the electrochromic component 181b of the back cover 181 may simultaneously display one color; by changing the driving voltage, the back cover 181 may display a plurality of colors. However, it is also possible to display a plurality of colors at the same time. In this case, the electrochromic component 181b of the back cover 181 may be divided into a plurality of units, and each unit may show different colors, such that the back cover may simultaneously display different colors. In some embodiments, different patterns, such as animated patterns and the like, may be formed by different colors displayed in different units of the back cover 181.

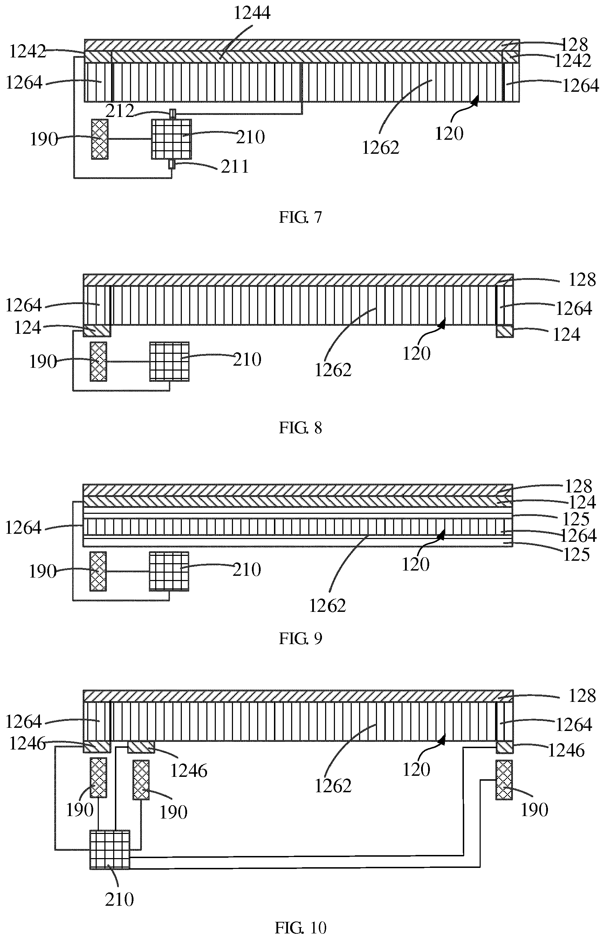

FIG. 7 is a schematic structural view of an electronic apparatus according to some embodiments of the present disclosure. As shown in FIG. 7, in some embodiments, the electrochromic component 124 may include a first electrochromic portion 1242 and a second electrochromic portion 1244. The first electrochromic portion 1242 may cover the non-display region 1264, and the second electrochromic portion 1244 may cover the display region 1262. The first electrochromic portion 1242 and the second electrochromic portion 1244 may be electrically connected to different control terminals of the control circuit 210. More specifically, as further shown in FIG. 7, the control circuit 210 may include a first control terminal 211 and a second control terminal 212 separate from each other. The first electrochromic portion 1242 may be electrically connected to the first control terminal 211 of the control circuit 210, and the second electrochromic portion 1244 may be electrically connected to the second control terminal 212. The first control terminal 211 is different from the second control terminal 212.

The control circuit 210 may separately control the first electrochromic portion 1242 and the second electrochromic portion 1244. In some embodiments, the control circuit 210 may control the first electrochromic portion 1242 according to the state of the functional component 190. The control circuit 210 may control the second electrochromic portion 1244 as required. For example, when it is necessary to check the components under the display region 1262 of the display screen 120, the second electrochromic portion 1244 may be controlled to become transparent. When the electronic apparatus is inactive, the second electrochromic portion 1244 may be controlled to display a preset color (such as blue). When the electronic apparatus is powered off, the second electrochromic portion 1244 may be controlled to display another preset color (such as green). When the electronic apparatus is inactive and charged, the second electrochromic portion 1244 may be controlled to display a further preset color (such as purple). In this way, it is possible to visually observe the current state of the electronic apparatus 100 by the color of the second electrochromic portion 1244.

In the description of the present disclosure, it should be understood that, terms such as "first", "second", and the like, are used herein for purposes of description, and are not intended to indicate or imply relative importance or significance or to imply the number of indicated technical features. Thus, the feature defined with "first", "second", and the like may explicitly or implicitly include one or more of such a feature.

FIG. 8 is a schematic structural view of an electronic apparatus according to some embodiments of the present disclosure. As shown in FIG. 8 and combining with FIG. 4, in some embodiments, the electrochromic component 124 may cover only the non-display region 1264. The display screen 120 may include a top edge and a bottom edge opposite to the top edge. The display region 1262 may also include a top edge and a bottom edge opposite to the top edge. The region defined between the top edge of the display screen 120 and the top edge of the display region 1262 is the non-display region 1264. The electrochromic component 124 may cover the entire non-display region 1264, such that it is convenient to arrange the electrochromic component 124. Besides, it is unnecessary to dispose a black ink layer on the non-display region 1264 any longer, that is to say, the non-display region may be covered by the electrochromic component 124 without setting or arranging the black ink layer. Thus, when the functional component 190 is in the idle state, that is, when the functional component 190 is not in operation, it is possible to control the driving voltage of the electrochromic component 124 to make the electrochromic component 124 to display black, which means the color of the electrochromic component 124 may be changed to black at this time, thereby reducing the light transmittance of the electrochromic component 124. Meanwhile, the inner side of the electronic apparatus 100 corresponding to the non-display region 1264 may be blocked, such that inner side of the electronic apparatus 100 corresponding to the non-display region 1264 may not be exposed. Besides, the black ink layer corresponding to the non-display region 1264 may be omitted. Of course, it is also possible to arrange a black ink layer in the display region 1262 of the display screen 120. The black ink layer may be located at one side of the display screen 120 that faces toward the inner side of the electronic apparatus.

In some embodiments, as shown in FIG. 8, the electrochromic component 124 may be disposed below the display screen 120, which means the electrochromic component 124 may be disposed at one side of the display screen 120 that faces towards an inner side of the electronic apparatus 100.

More specifically, in some embodiments, as shown in FIG. 6, the housing 190 may include the back cover 181. The back cover 181 and display screen 120 may be disposed at two opposite sides of the electronic apparatus 100. The electrochromic component 124 may be disposed between the display screen 120 and the back cover 181.

The electrochromic component 124 may be configured to replace the original black ink. That is to say, no black ink will be provided in the electronic apparatus in some embodiments of the present disclosure.

FIG. 9 is a schematic structural view of an electronic apparatus according to some embodiments of the present disclosure. As shown in FIG. 9, the electronic apparatus 100 may further include a cover 128. The cover 128 may cover the display screen 120. The electrochromic component 124 may be disposed above the display screen 120, and further disposed between the display screen 120 and the cover 128. The cover 128 may be the cover described in the above embodiments. The cover 128 may be configured to protect a display layer 126.

In some embodiments, the display screen 120 may include two substrates 125 opposite to each other and the display layer 126 disposed between the two substrates 125. In some embodiments, the two substrates 125 may be a transparent substrate 125 having a high light transmittance. In some embodiments, it is possible to dispose no display layer 126 in the non-display region 1264. In this way, it is possible to reduce the impact of the display layer 126 on light.

In some embodiments, the electrochromic component 124 may include a connection point disposed at an edge thereof. The connection point of the electrochromic layer 124 may be electrically connected to the control circuit 210. A wire connecting the electrochromic component 124 and the control circuit 210 may surround an edge of the display screen 120. The connection point may also be disposed at an end portion of the electrochromic component 124. In this case, a through hole may be defined in the display screen 120. The wire may pass through the through hole, and further connect the electrochromic component 124 to the control circuit 210.

In some embodiments, as shown in FIG. 10, the number of the functional components 190 may be at least two. The electrochromic component 124 may include at least two third electrochromic portions 1246 in one-to-one correspondence with the at least two functional components 190. Each of the at least two functional components 190 may be disposed correspondingly to a corresponding one of the third electrochromic portions 1246 and connected to the corresponding one of the third electrochromic portions 1246 via the control circuit 210.

The control circuit 210 may control each third electrochromic portion 1246 separately. For example, when the functional components 190 include a light sensor, a front camera, and a proximity sensor, the electrochromic component 124 may include three third electrochromic portions 1246. Each of the functional components 190 may correspond to one third electrochromic portion 1246. The light transmittance of the third electrochromic portion 1246 may be controlled according to the state of the corresponding functional component 190.

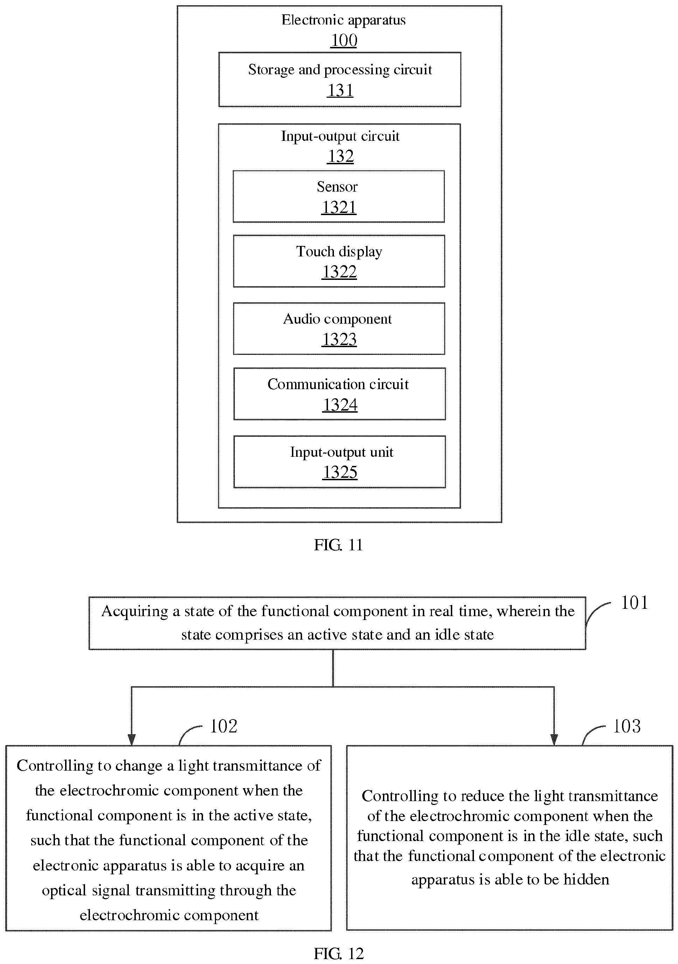

FIG. 11 is a block diagram of an electronic apparatus according to some embodiments of the present disclosure. As shown in FIG. 11, the control circuit of electronic apparatus 100 may include a storage and processing circuit 131. The storage and processing circuit 131 may include a memory, such as a hard disk drive memory, a memory (such as a flash memory, other electrically-programmable-read-only memory configured to form a solid state drive, and the like), a transitory memory (such as a static or dynamic random access memory, and the like), and the like. The type of the memory may not be limited in the embodiments of the present disclosure. The storage and processing circuit 131 may include a processing circuit configure to control an operation of the electronic apparatus 100. The processing circuit may be implemented based on one or more microprocessors, microcontrollers, digital signal processors, baseband processors, power management units, audio codec chips, application specific integrated circuits, display driver integrated circuits, and the like.

The storage and processing circuit 131 may be configured to run software on the electronic apparatus 100, such as an Internet browsing application, a Voice over Internet Protocol (VOIP) phone call application, an email application, a media playback application, an operating system function, and the like. These software may be used to perform some control operations, such as image acquisition based on a camera, an ambient light measurement based on an ambient light sensor, an proximity sensor measurement based on a proximity sensor, information display achieved based on a state indicator such as a state indicating lamp (such as a light emitting diode and the like), a touch event detection based on a touch sensor, a function associated with displaying information on multiple (for example, layered) displays, an operation associated with performing a wireless communication function, an operation associated with collecting and generating an audio signal, a control operation associated with collecting and processing press event data of a button, and other functions of the electronic apparatus 100, and the like. These will not be limited in the embodiments of the present disclosure.

In some embodiments, the electronic apparatus 100 may also include an input-output circuit 132. The input-output circuit 132 may be configured to enable the electronic apparatus 100 to achieve the input and output of data. That is, input-output circuit 132 may be configured to enable the electronic apparatus 100 to receive data from an external device and output data to the external device from the electronic apparatus 100. The input-output circuit 132 may further include a sensor 1321. The sensor 1321 may include an ambient light sensor, a proximity sensor based on light and capacitance, a touch sensor (such as a light type touch sensor and/or a capacitive touch sensor; in some embodiments, the touch sensor may be a part of a touch display screen, or may serve as an independently touch sensor structure), an acceleration sensor, a temperature sensor, and other sensors.

The input-output circuit 132 may also include one or more displays, such as display 1322. The display 1322 may refer to the display screen 12 described above. The display 1322 may include one of a liquid crystal display, an organic light emitting diode display, an electronic ink display, a plasma display, a display using other display technologies, or a combination thereof. The display 1322 may include a touch sensor array (that is, the display 1322 may be a touch display). The touch sensor may be a capacitive touch sensor formed by an array of transparent touch sensor electrodes (such as indium tin oxide (ITO) electrodes). In some embodiments, the touch sensor may also be a touch sensor formed by using other touch technologies, such as acoustic touch, pressure-sensitive touch, resistive touch, optical touch, and the like. These will not be limited in the embodiments of the present disclosure.

The electronic apparatus 100 may also include an audio component 1323. The audio component 1323 may be configured to provide the electronic apparatus 100 with functions of audio input and output. The audio component 1323 in the electronic apparatus 100 may include a speaker, a microphone, a buzzer, a tone generator, and other components configured to generate and detect sound.

The electronic apparatus 100 may also include a communication circuit 1324. The communication circuit 1324 may be configured to provide the electronic apparatus 100 with abilities to communicate with the external device. The communication circuit 1324 may include an analog and digital input-output interface circuit, and a wireless communication circuit based on radio frequency signals and/or optical signals. The wireless communication circuit in the communication circuit 1324 may include a radio frequency transceiver circuit, a power amplifier circuit, a low noise amplifier, a switch, and a filter. For example, the wireless communication circuit in the communication circuit 1324 may include a circuit configured to support Near Field Communication (NFC) by transmitting and receiving near-field coupling electromagnetic signals. For example, the communication circuit 1324 may include a near-field communication antenna and a near-field communication transceiver. The communication circuit 1324 may also include a cellular telephone transceiver, a wireless local area network transceiver circuit, and the like.

The electronic apparatus 100 may further include a power management circuit and other input-output units 1325. The input-output unit 1325 may include a button, a joystick, a click wheel, a scroll wheel, a touch pad, a keypad, a keyboard, a camera, a light-emitting diode, and other state indicators.

The user may control the operation of the electronic apparatus 100 by inputting commands through the input-output circuit 132. Besides, it is possible to use the output data of the input-output circuit 132 to receive the state information and other outputs from the electronic apparatus 100.

FIG. 12 is a flow chart of a method for controlling an electronic apparatus according to some embodiments of the present disclosure. As shown in FIG. 12, the method for controlling the electronic apparatus may be applied to the electronic apparatus in any embodiment described above. The method for controlling the electronic apparatus may include actions executed by the following blocks.

At block 101, a state of a functional component may be detected/ acquired in real time. In some embodiments, the state may include an active state and an idle state.

At block 102, when the functional component is in the active state, a light transmittance of the electrochromic component may be controlled to change (reduce), such that the functional component of the electronic apparatus is able to be exposed from the electrochromic component and acquire an optical signal transmitting through the electrochromic component.

At block 103, when the functional component is in the idle state, the light transmittance of the electrochromic component may be controlled to reduce, such that the functional component of the electronic apparatus may be hidden by the electrochromic component.

The functional component may be a component that needs to obtain external light of the electronic apparatus 100, such as a front camera, a light sensor, a proximity sensor, a 3D structured optical module, and the like. In some embodiments, by changing the light transmittance of the electrochromic component, it is possible for the function component to obtain the external light. Besides, the functional component may be completely hidden by the electrochromic component when the functional component is not in use. In this way, it is unnecessary to define a hole in the display screen to allow the external light to enter the functional component. At the same time, the electrochromic component may be used to replace the black ink, such that more external light may be allowed to enter the functional component, thereby improving the effect of the functional component.

In some embodiments, the number of the functional components may be at least two. The electrochromic component may include at least two third electrochromic portions disposed in one-to-one correspondence with the at least two functional components. The method may further include the following actions: detecting/acquiring a state of each of the functional components in real time; controlling, according to the state of each of the functional components, to change a light transmittance of the third electrochromic portions corresponding to the functional components.

More specifically, the number of functional components may be at least two. For example, the functional components may include at least two of the light sensor, the front camera, the proximity sensor, and the 3D structured optical module. Each of the functional components may correspond to one corresponding third electrochromic portion. The state of each of the functional components may be detected/acquired in real time. When the state of any functional component changes, the third electrochromic portion corresponding to the functional component having the state changed may be controlled by using the method of the embodiments previously described.

In some embodiments, the method for controlling the electronic apparatus may further include: detecting/acquiring a state of the functional component in real time, wherein the state may include an active state and an idle state. When the functional component is switched to the active state, the electrochromic component may be controlled to change the light transmittance such that the functional component of the electronic apparatus may acquire the optical signal transmitting through the electrochromic component. When the functional component is switched to the idle state, the electrochromic component may be controlled to reduce the light transmittance, such that the functional components of the electronic apparatus may be hidden.

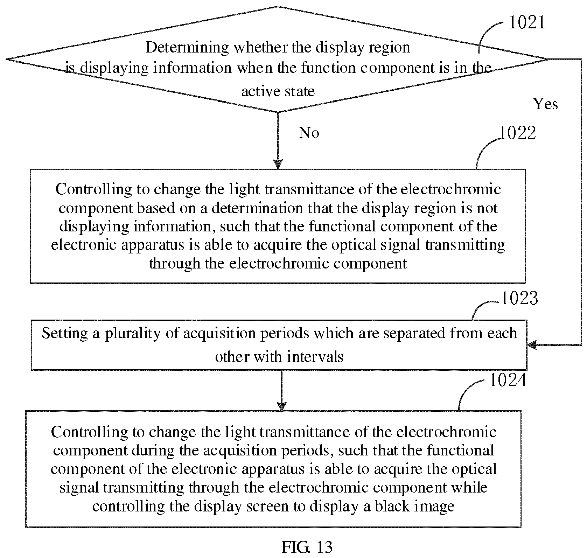

FIG. 13 is a flow chart showing the block 102 shown in FIG. 12 according to some embodiments of the present disclosure. As shown in FIG. 13, in some embodiments, the block 102 may include actions executed by the following blocks.

At block 1021, when the function component is in the active state, whether the display region is displaying information may be determined. Based on a determination that the display region is not displaying information, the method may proceed to the block 1022. However, based on a determination that the display region is displaying information, the method may proceed to the block 1023.

At block 1022, the light transmittance of the electrochromic component may be controlled to change, such that the functional component of the electronic apparatus may be able to be exposed from the electrochromic component and acquire the optical signal transmitting through the electrochromic component.

In some embodiments, the electrochromic component may include a first electrochromic portion and a second electrochromic portion. The first electrochromic portion may cover the non-display region, and the second electrochromic portion may cover the display region. A projection of the functional component on the display screen may be located within the non-display region. It is also possible to control to change a light transmittance of the first electrochromic portion when the display region is not displaying content, such that the functional component of the electronic apparatus may be able to be exposed from the electrochromic component and acquire the optical signal transmitting through the first electrochromic portion.

At block 1023, a plurality of acquisition periods which are separated from each other with intervals may be set. The acquisition periods may be very short time periods, such as 5 milliseconds, 10 milliseconds, 20 milliseconds, and the like. Two adjacent acquisition periods may be separated from each other by a very short interval, such as 5 milliseconds, 10 milliseconds, 20 milliseconds, 30 milliseconds, and the like.

At block 1024, the light transmittance of the electrochromic component may be controlled to change during the acquisition periods, such that the functional component of the electronic apparatus may be able to be exposed from the electrochromic component and acquire the light signal transmitting through the electrochromic component. Meanwhile, the display screen may be controlled to display a black image. Herein, the display screen display a "black image" means that, the display screen is in an idle state, not in operation, and does not display any information. By controlling the display to display the black image, it is possible to reduce the influence of the display information on the functional components, without affecting the display information of the display.

In some embodiments, the display screen may include a display region and a non-display region, and a projection of the functional component on the display screen may be located within the non-display region. The non-display region may be covered by the electrochromic component without a black ink layer. The block of controlling the electrochromic component to reduce the light transmittance when the functional component is in the idle state may include the following operation: when the functional component is in the idle state, controlling to change a color of the electrochromic component to black. Herein, the electrochromic component may be the whole electrochromic component, or may be the first or third electrochromic component corresponding to the functional component.

In some embodiments, the method may further include the following operations: determining whether the electronic apparatus fails; based on a determination that the electronic apparatus fails, controlling the electrochromic component to be transparent by controlling a voltage applied to the electrochromic component.

In some embodiments of the present disclosure, a storage medium may be further provided. The storage medium may store a computer program. When the computer program runs on the computer, the computer may be caused to execute the method for controlling the electronic apparatus in the embodiments described above. The method may include actions executed by blocks such as: detecting/acquiring a state of a functional component in real time, wherein the state may include an active state and an idle state; when the functional component is in the active state, controlling to change a light transmittance of the electrochromic component, such that the functional component of the electronic apparatus may be able to be exposed from the electrochromic component and acquire an optical signal transmitting through the electrochromic component; when the component is in the idle state, controlling to reduce the light transmittance of the electrochromic component, such that the functional component of the electronic apparatus may be hidden by the electrochromic component.

In some embodiments of the present disclosure, the storage medium may be a non-transitory computer-readable storage medium. In some embodiments, the storage medium may be a magnetic disk, an optical disk, a read-only memory (ROM), a random access memory (RAM), and the like.

In the above embodiments, the descriptions of the various embodiments are different, and the details that are not detailed in a certain embodiment may be referred to the related descriptions of other embodiments.

In some embodiments of the present disclosure, the electronic apparatus, the method for controlling the electronic apparatus, and the storage medium may be described in detail. The principles and the embodiments of the present disclosure may be described with specific examples. However, the description of the above embodiments is only used for better understanding of the present disclosure. Meanwhile, those skilled in the art may make modifications to the specific embodiments and the application scope according to the idea of the present disclosure. In conclusion, the specification of the present disclosure should not be construed as limiting the present disclosure.

## Claims

1. An electronic apparatus, **characterized by** comprising:
a display screen (120);
an electrochromic component (124), arranged on the display screen (120);
a functional component (190), covered by the electrochromic component (124) and having an active state and an idle state; and
a control circuit (210), electrically connected to the electrochromic component (124) and configured to control the electrochromic component (124);
wherein when the functional component (190) is in the active state, the control circuit (210) controls to increase a light transmittance of the electrochromic component (124), such that the functional component (190) of the electronic apparatus (100) is able to acquire an optical signal transmitting through the electrochromic component (124); when the functional component (190) is in the idle state, the control circuit (210) controls to reduce the light transmittance of the electrochromic component (124), such that the functional component (190) of the electronic apparatus (100) is able to be hidden.

2. The electronic apparatus of claim 1, further comprising a cover (128) covering the display screen (120), wherein the electrochromic component (124) is disposed between the cover (128) and the display screen (120).

3. The electronic apparatus of any one of claims 1-2, wherein the display screen (120) comprises a display region (1262) and a non-display region (1264); the electrochromic component (124) covers the non-display region (1264), and a projection of the functional component (190) on the display screen (120) is located within the non-display region (1264); when the functional component (190) is in the idle state, the control circuit (210) controls to change a color of the electrochromic component (124) to black.

4. The electronic apparatus of claim 3, wherein the display screen (120) comprises two substrates (125) and a display layer (126) sandwiched between the two substrates (125); the display layer (126) is disposed in the display region (1262).

5. The electronic apparatus of any one of claims 1-2, wherein the display screen (120) comprises a display region (1262) and a non-display region (1264); the electrochromic component (124) comprises:
a first electrochromic portion (1242), covering the non-display region (1264) and electrically connected to a first control terminal of the control circuit (210); and
a second electrochromic portion (1244), covering the display region (1262) and electrically connected to a second control terminal of the control circuit (210).

6. The electronic apparatus of any one of claims 1-5, wherein the number of the functional components (190) is at least two, and the electrochromic component (124) comprises at least two electrochromic portions (1246) in one-to-one correspondence with the at least two functional components (190); each of the functional components (190) is disposed correspondingly to a corresponding one of the electrochromic portions (1246) and connected to the corresponding one of the electrochromic portions (1246) via the control circuit (210).

7. The electronic apparatus of any one of claims 1-6, further comprising a housing (180), wherein the display screen (120) is mounted in the housing (180); the housing (180) comprises a back cover (181); the back cover (181) and the display screen (120) are located at two opposite sides of the electronic apparatus (100), and the electrochromic component (124) is disposed between the display screen (120) and the back cover (181).

8. The electronic apparatus of claim 7, wherein the back cover (181) comprises a transparent body (181a) and an additional electrochromic component (181b) attached to the transparent body (181a); the control circuit (210) is electrically connected to the additional electrochromic component (181b) and configured to control a light transmittance of the additional electrochromic component (181b).

9. A method for controlling an electronic apparatus (100), the electronic apparatus (100) comprising a display screen (120), a functional component (190), and an electrochromic component (124); the electrochromic component (124) covering the functional component (190); the method comprising:
acquiring (101) a state of the functional component (190) in real time, wherein the state comprises an active state and an idle state;
controlling (102) the electrochromic component (124) to increase a light transmittance of the electrochromic component (124) when the functional component (190) is in the active state, such that the functional component (190) of the electronic apparatus (100) is able to acquire an optical signal transmitting through the electrochromic component (124); and
controlling (103) the electrochromic component (124) to reduce the light transmittance when the functional component (190) is in the idle state, such that the functional component (190) of the electronic apparatus (100) is able to be hidden.

10. The method of claim 9, wherein the display screen (120) comprises a display region (1262) and a non-display region (1264);
the controlling (102) the electrochromic component (124) to change the light transmittance of the electrochromic component (124) when the functional component (190) is in the active state, such that the functional component (190) of the electronic apparatus (100) is able to acquire the optical signal transmitting through the electrochromic component (124), comprises:
determining (1021) whether the display region (1262) is displaying information when the function component is in the active state;
controlling (1022) to change the light transmittance of the electrochromic component (124) based on a determination that the display region (1262) is not displaying information, such that the functional component (190) of the electronic apparatus (100) is able to acquire the optical signal transmitting through the electrochromic component (124);
setting (1023) a plurality of acquisition periods which are separated from each other with intervals based on a determination that the display region (1262) is displaying information; and
controlling (1024) to change the light transmittance of the electrochromic component (124) during the acquisition periods, such that the functional component (190) of the electronic apparatus (100) is able to acquire the optical signal transmitting through the electrochromic component (124) while controlling the display screen (120) to display a black image.

11. The method of claim 10, wherein the electrochromic component (124) comprises a first electrochromic portion (1242) and a second electrochromic portion (1244); the first electrochromic portion (1242) covers the non-display region (1264), and the second electrochromic portion (1244) covers the display region (1262); a projection of the functional component (190) on the display screen (120) is located within the non-display region (1264);
the controlling (1022) to change the light transmittance of the electrochromic component (124) based on the determination that the display region (1262) is not displaying information, such that the functional component (190) of the electronic apparatus (100) is able to acquire the optical signal transmitting through the electrochromic component (124), comprises:
controlling to change a light transmittance of the first electrochromic portion (1242) when the display region (1262) is not displaying content, such that the functional component (190) of the electronic apparatus (100) is able to acquire the optical signal transmitting through the first electrochromic portion (1242).

12. The method of any one of claims 9-11, wherein the number of the functional components (190) is at least two, and the electrochromic component (124) comprises at least two electrochromic portions (1246) disposed in one-to-one correspondence with the at least two functional components (190); the method further comprises:
acquiring a state of each of the functional components (190) in real time; and
controlling, according to the state of each of the functional components (190), to change light transmittances of the electrochromic portions (1246) corresponding to the functional components (190).

13. The method of any one of claims 9-12, wherein the display screen (120) comprises a display region (1262) and a non-display region (1264), and a projection of the functional component (190) on the display screen (120) is located within the non-display region (1264); the non-display region (1264) is covered by the electrochromic component (124);
the controlling (103) the electrochromic component (124) to reduce the light transmittance when the functional component (190) is in the idle state, comprises:
when the functional component (190) is in the idle state, controlling to change a color of the electrochromic component (124) to black.

14. The method of any one of claims 9-13, further comprising:
determining whether the electronic apparatus (100) fails;
based on a determination that the electronic apparatus (100) fails, controlling the electrochromic component (124) to be transparent by controlling a voltage applied to the electrochromic component (124).

15. A storage medium, characterize in that, the storage medium is configured to store a computer program which, when executed by a computer, cause the computer to perform the method of any one of claims 9-14.
